(19) Europäisches Patentamt
European Patent Office
Office européen des brevets

(11) **EP 2 211 297 A1**

(12) **EUROPEAN PATENT APPLICATION**

(43) Date of publication:
**28.07.2010 Bulletin 2010/30**

(51) Int Cl.:
***G06Q 10/00*** *(2006.01)*

(21) Application number: **09155541.7**

(22) Date of filing: **18.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **23.01.2009 TW 98103134**

(71) Applicant: **G5 Capital Management Ltd.
Taipei City 106 (TW)**

(72) Inventors:
• **Jeng, Jen-Her
106, Taipei (TW)**

• **Lin, Cheng-Chang
106, Taipei (TW)**
• **Niu, Wei-Fang
106, Taipei (TW)**
• **Cheng, Chen-Pang
106, Taipei (TW)**

(74) Representative: **Hüttermann, Aloys
Michalski Hüttermann & Partner
Patentanwälte
Neuer Zollhof 2
40221 Düsseldorf (DE)**

(54) **Working environment positioning system, method and computer program product thereof**

(57) In a working environment positioning system, there is comprised an interface unit for receiving information input by users; a characteristic analysis unit coupled to the interface unit for analyzing characteristic indices of each of the users based on the input information; a compatible-degree analysis unit coupled to the characteristic analysis unit for analyzing a compatible degree of each of the users with other users based on the characteristic indices to generate a plurality of corresponding compatibility indices, from which a compatible-degree matrix is obtained; and a report generating unit for receiving analysis results from the characteristic analysis unit and the compatible-degree analysis unit, analyzing a positioning relation of each of the users in a working environment, and generating an analysis report accordingly. A working environment positioning method and a computer program product for implementing the method are also disclosed.

**EP 2 211 297 A1**

**Description**

FIELD OF THE INVENTION

The present invention relates to a working environment positioning system and method, and more particularly to a working environment positioning system and method for analyzing a plurality of characteristic indices of each of a plurality of users based on information input by the users, computing to derive a compatible-degree matrix based on the characteristic indices, computing a spatial positioning relation of each of the users in a working environment based on the compatible-degree matrix. The present invention also relates to a computer program product for executing the working environment positioning method.

BACKGROUND OF THE INVENTION

In the contemporary knowledge-based economy, "man" is the core forming the competing power of an enterprise. An enterprise must build effective social networking and plan adequate organization to excite organization members' ability and eagerness, so that the members can together constantly create and share the techniques and experiences uniquely owned by the enterprise to achieve the goal of establishing an everlasting enterprise. Therefore, good human resource management is always an important issue that must be encountered with by all enterprisers and a key factor for an enterprise to success. Conventional human resource management strategies comprise personnel recruitment, educational training, performance management, etc. In most cases, employees' characteristics are understood via questionnaires and then analyzed, so that the human resource management strategies are adjusted based on the analysis results. These strategies only allow the enterprise to consider the employees' personal characteristics, and the enterprise is subject to a great risk of statistical bias. More specifically, these conventional human resource management strategies do not enable accurate measurement of employees' characteristics, nor do they help an enterpriser or a manager to understand the relation between men, between men and organization, and between organizations.

SUMMARY OF THE INVENTION

A primary object of the present invention is to overcome the problems in the conventional human resource management by providing a working environment positioning system, which comprises an interface unit, a characteristic analysis unit, a compatible-degree analysis unit, and a report generating unit. The interface unit receives information input by a plurality of users. The characteristic analysis unit is coupled to the interface unit for analyzing characteristic indices of each of the users based on the input information. The compatible-degree analysis unit is coupled to the characteristic analysis unit for analyzing a compatible degree of each of the users with other users based on the characteristic indices to generate a plurality of corresponding compatibility indices, from which a compatible-degree matrix is obtained. The report generating unit receives analysis results from the characteristic analysis unit and the compatible-degree analysis unit, analyzes a positioning relation of each of the users in a working environment, and generates an analysis report accordingly.

In an operable embodiment, the working environment positioning system further comprises a spatial positioning analysis unit, which is coupled to the compatible-degree analysis unit for computing a spatial positioning relation of each of the users in the working environment based on the compatible-degree matrix; and the report generating unit further receives analysis results from the spatial positioning analysis unit to generate the analysis report accordingly.

Another object of the present invention is to provide a working environment positioning method, which comprises the following steps: (1) using an interface unit to receive information input by a plurality of users; (2) using a characteristic analysis unit to analyze a plurality of characteristic indices of each of the users based on the input information; (3) using a compatible-degree analysis unit to analyze a compatible degree of each of the users with other users based on the characteristic indices to generate a plurality of corresponding compatibility indices, from which a compatible-degree matrix is obtained; and (4) using a report generating unit to receive analysis results from the characteristic analysis unit and the compatible-degree analysis unit, analyze a positioning relation of each of the users in a working environment based on the analysis results, and generate an analysis report accordingly.

In an operable embodiment, the working environment positioning method of the present invention further comprises a step of using a spatial positioning analysis unit to compute a spatial positioning relation of each of the users in the working environment based on the compatible-degree matrix, so that the report generating unit further receives analysis results from the spatial positioning analysis unit to generate the analysis report accordingly.

A further object of the present invention is to provide a working environment positioning computer program product. When the computer program product is loaded onto a computer system and runs, the working environment positioning method according to the present invention can be executed.

In brief, the working environment positioning system, the method and the computer program product thereof according to the present invention provide one or more of the following advantages:

(1) When a business organization needs employees showing specific personal characteristics, the working environment positioning system, method, and computer program product of the present invention can narrow the range of persons to be recruited or examined, so that time and labor needed in arranging position promotion and seeking for new recruits can be decreased to save management costs and resources. An enterprise can also use the working environment positioning system, method, and computer program product of the present invention to examine whether an applicant has personal characteristics compatible with the existing enterprise culture, so as to accurately choose employees ideal for the enterprise.

(2) A manager or an enterprise owner can follow the analysis results to understand what types of works are more suitable for which employees, and respectively assign tasks requiring cooperative work or independent work to those suitable employees.

(3) Two persons having high compatible degree between them usually have closer lifestyle and are easier to communicate with each other. Therefore, it would be beneficial to the organization if an experienced employee having high compatibility with new recruits is recommended to act as a mentor to lead the new recruits in working correctly and assist the new recruits in accepting necessary training. In addition, the mentor can also inquire after, offer suggestion to, or give proper instruction to the new recruits as feedback to their performance in work or educational training, so as to help the new recruits in getting familiar with the assigned work and getting along well with the organization.

(4) When organizing a team for a particular task, it is also possible to follow the analysis results to pick up employees having relatively high tacit agreement with one another to form the team. With the team members having close characteristics and high tacit agreement with one another, enhanced coherence and sense of organizational identification can be obtained to avoid unnecessary conflicting viewpoints and upgrade work efficiency and work satisfaction.

(5) The present invention can also be used in checking and determining whether an employee has the characteristic of a high-rank manager or the potential in management, so that such employee can be recommended to participate in programs and trainings for cultivating managing staffs. Moreover, the present invention can also be used in tracking the employees for their accumulated experiences in work and improvements after accepting related trainings, so as to determine whether there is any employee whose positioning is approaching to the location at where high-rank managers are positioned to show the capability of acting as a high-rank manager or being a successor thereof. Meanwhile, the employees are well assisted in developing their professional career.

BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a block diagram of a working environment positioning system according to a first embodiment of the present invention;

Fig. 2 is a block diagram of a working environment positioning system according to a second embodiment of the present invention;

Fig. 3 is a flowchart showing the steps comprised in a working environment positioning method according to a first embodiment of the present invention;

Fig. 4 is a flowchart showing the steps comprised in a working environment positioning method according to a second embodiment of the present invention;

Fig. 5 is a first spatial positioning relation graph obtained with the working environment positioning system, method, and computer program product thereof according to the present invention; and

Fig. 6 is a second spatial positioning relation graph obtained with the working environment positioning system, method, and computer program product thereof according to the present invention.

DETAILED DESCRIPTION OF THE PREFERRED EMBODIMENTS

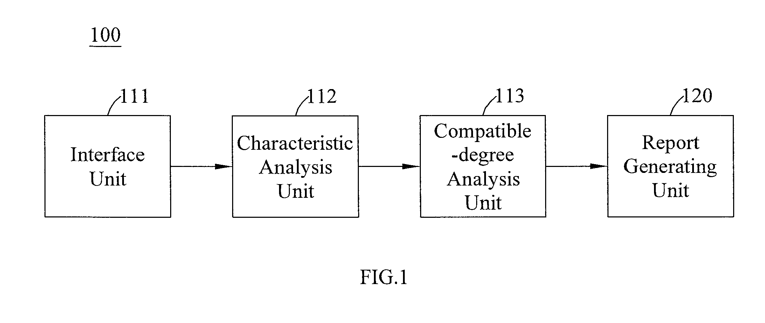

Please refer to Fig. 1 that is a block diagram of a working environment positioning system 100 according to a first embodiment of the present invention. As shown, the working environment positioning system 100 comprises an interface unit 111, a characteristic analysis unit 112, a compatible-degree analysis unit 113, and a report generating unit 120. In an operable embodiment of the present invention, the interface unit 111, the characteristic analysis unit 112, the compatible-degree analysis unit 113, and the report generating unit 120 may be implemented in the form of hardware, such as being formed from a plurality of electronic elements, or in the form of an application specific integrated circuit (ASIC). In another operable embodiment of the present invention, the above units 111, 112, 113 and 120 may be otherwise implemented in the form of software, such as being computer programs, such that when these computer programs are loaded onto a computer system, they may be run to execute various functions. In a further embodiment of the present invention, these units 111, 112, 113 and 120 may be implemented in the form of combined hardware and software, such as implementing some of theses units in the form of an ASIC while other units are implemented in the form of computer programs.

The interface unit 111 may receive information input by a plurality of users, and may comprise a plurality of predetermined questions correlated with a plurality of characteristic indices. The questions may be presented in the form of general questionnaires. Alternatively, the predetermined questions may be presented to users in a game mode, such as the LOHAS (Life of Health and Sustainability) Survey. In the game mode, situational scenes correlated with the plurality of predetermined questions are presented to the users. For example, when the user is requested to answer whether he or she makes periodic health examination, a scene showing a nurse or a hospital is displayed. Or, when a user in the game approaches to a car, the user is asked to consider his or her priority sequence of different factors in buying a car, including car performance, price, security, equipment, etc. In this way, the users may answer the questions in a completely natural and pressure-free manner, and any possible deviation in the answers due to consideration from an intentional standpoint may be avoided.

The characteristic analysis unit 112 is coupled to the interface unit 111 for analyzing a plurality of characteristic indices of each of the users according to the information input by the users at the interface unit 111. That is, the characteristic analysis unit 112 may analyze each of the users' characteristic indices based on the information input by the user in answering the plurality of predetermined questions. In the illustrated first embodiment, the characteristic indices may comprise, for example, Lifestyle Index, Tech User Index, Stress Resistance Index, or other indices in connection with lifestyle. Therefore, the questions in the interface unit 111 requesting the users to answer are corresponding to the characteristic indices to be analyzed. In other words, the characteristic analysis unit 112 is able to analyze different characteristic indices of the users from the information input by the users when they answer the questions. In an operable embodiment, a predetermined classification mechanism is adopted to classify the input answers of the users to the plurality of predetermined questions, so as to obtain the characteristic indices of each of the users. The predetermined classification mechanism may be implemented through the Classification and Regression Tree (CART) Analysis but without being limited thereto. For instance, through the CART analysis, it is obtained a first user hrk00001 has Lifestyle Index $a_{11}$=100, Tech User Index $a_{21}$=100, and an Stress Resistance Index $a_{31}$=100; a second user hrk00002 has Lifestyle Index $a_{12}$=80, Tech User Index $a_{22}$=90, and an Stress Resistance Index $a_{32}$=90; and a third user hrk00003 has Lifestyle Index $a_{13}$=60, Tech User Index $a_{23}$=60, and an Stress Resistance Index $a_{33}$=70.

The compatible-degree analysis unit 113 is coupled to the characteristic analysis unit 112, and is able to analyze a compatible degree of each of the users with other users based on the users' characteristic indices to thereby generate a plurality of corresponding compatibility indices, from which a compatible-degree matrix may be obtained. By comparing any two users to find out the degree of difference between their characteristic indices, social Consensus Coefficient information may be established and it is possible to know from the Consensus Coefficient how well the two persons may tacitly agree with each other. The higher the Consensus Coefficient is, the easier the two persons are compatible with each other. On the other hand, the lower the Consensus Coefficient is, the harder the two persons are compatible with each other. The Consensus Coefficient may be calculated using a mathematical formula, such as that listed below:

$$\text{Consensus Coefficient} = \sum_{k=1}^{N} f_k(a_{ki}, a_{kj}) \times w_k$$

For example, in the illustrated first embodiment, the Consensus Coefficient may be calculated using the following formula:

$$\text{Consensus Coefficient} = \left(70 - \left|a_{1i} - a_{1j}\right|\right) \times 0.5 + \left(100 - \left|a_{2i} - a_{2j}\right|\right) \times 0.5 + \left(\frac{a_{3i} \times a_{3j}}{40}\right) \times 0.5$$

With the above formula and the above characteristic indices obtained for the first, the second and the third user by the characteristic analysis unit 112, a first Consensus Coefficient of 182.5 is obtained for the first user hrk00001 and the second user hrk00002, a second Consensus Coefficient of 132.5 is obtained for the first user hrk00001 and the third user hrk00003, and a third Consensus Coefficient of 138.75 is obtained for the second user hrk00002 and the third user hrk00003.

With the increasing number of persons involved in an organization, a complicated networking is built among these persons. The compatible-degree matrix established based on the social Consensus Coefficient information through the working environment positioning system of the present invention may present the complicated social networking relation in a simple numerical matrix as shown in the following Table 1:

Table 1 Compatible-degree Matrix Corresponding to the First Embodiment

|  | hrk00001 | hrk00002 | hrk00003 | ... | hrk00xxx |
|---|---|---|---|---|---|
| hrk00001 | 210 | 182.5 | 132.5 |  | ...... |
| hrk00002 | 182.5 | 186.25 | 138.75 |  | ...... |
| hrk00003 | 132.5 | 138.75 | 146.25 |  | ...... |
| ...... |  |  |  |  |  |
| hrk00xxx | ..... | ...... | ..... | ... | ..... |

In the Table 1, the numerics in the compatible-degree matrix indicate the indices of Consensus between any two persons. When the Consensus Coefficient for two persons is high, it means the two persons can get along with each other with highly tacit agreement to create a harmonious and good cooperative relation during work. In brief, the two persons are suitable for working together. On the other hand, when the Consensus Coefficient for two persons is low, it means the two persons have poor tacit agreement between them and tend to disagree with each other. Thus, it is preferable for each of the two persons to separately undertake an independent work or to work with another person having higher tacit agreement between them. For instance, as can be seen from Table 1, the first user hrk00001 and the second user hrk00002 have a Consensus Coefficient of 182.5 between them, while the first user hrk00001 and the third user hrk00003 have a Consensus Coefficient of 132.5 between them. Therefore, it is concluded the first user hrk00001 and the second user hrk00002 have better tacit agreement between them.

The report generating unit 120 may receive analysis results from the characteristic analysis unit 112 and the compatible-degree analysis unit 113, analyze a positioning relation of each of the users in a working environment, and generate an analysis report accordingly.

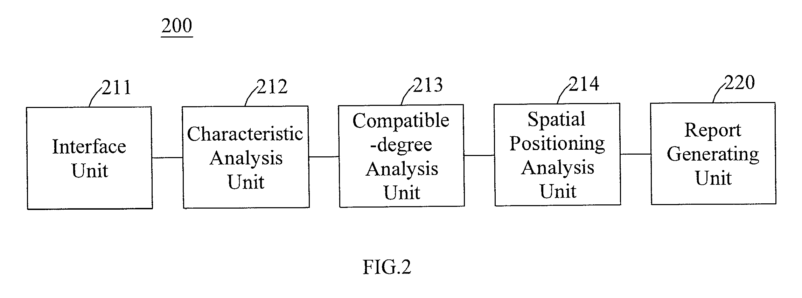

Please refer to Fig. 2 that is a block diagram of a working environment positioning system 200 according to a second embodiment of the present invention. In the second embodiment, the working environment positioning system 200 comprises an interface unit 211, a characteristic analysis unit 212, a compatible-degree analysis unit 213, a spatial positioning analysis unit 214, and a report generating unit 220. The second embodiment is generally structurally similar to the first embodiment, except for the spatial positioning analysis unit 214. The spatial positioning analysis unit 214 is coupled to the compatible-degree analysis unit 213 and adapted to compute a spatial positioning relation of each of the plurality of users in the working environment based on the compatible-degree matrix. Thus, the report generating unit 220 may further receive analysis results from the spatial positioning analysis unit 214 and generate the analysis report accordingly. The spatial positioning analysis unit 214 may visually display a graph showing the relative relations among different members in an enterprise, so as to assist in good employee positioning and establishment of a human resource adjustment mechanism in the enterprise. In the second embodiment, the spatial positioning analysis may be implemented through Multidimensional Scaling (MDS) but without being limited thereto. MDS is a statistical analysis method using a graph to show the nature of some primary data. After calculation based MDS, data may be converted to obtain a multi-dimensional geometric space. In the multi-dimensional geometric space, points represent entities or persons, and the distance between two points represents the degree of difference between two entities or persons represented by the two points.

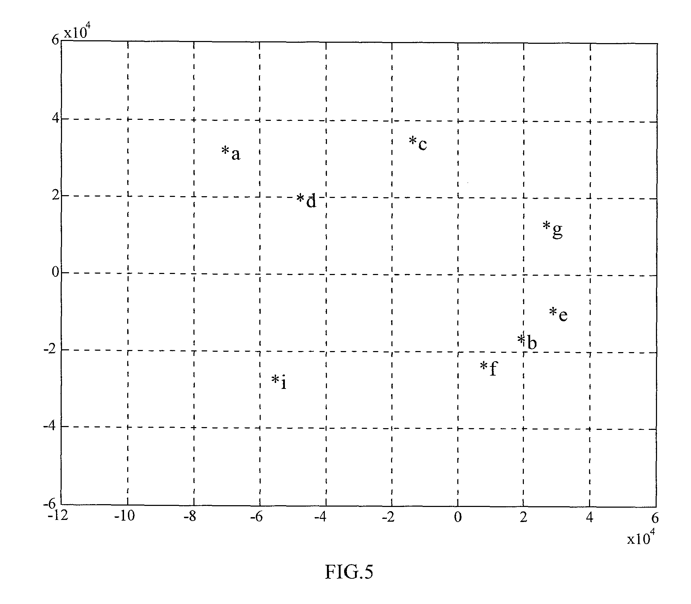

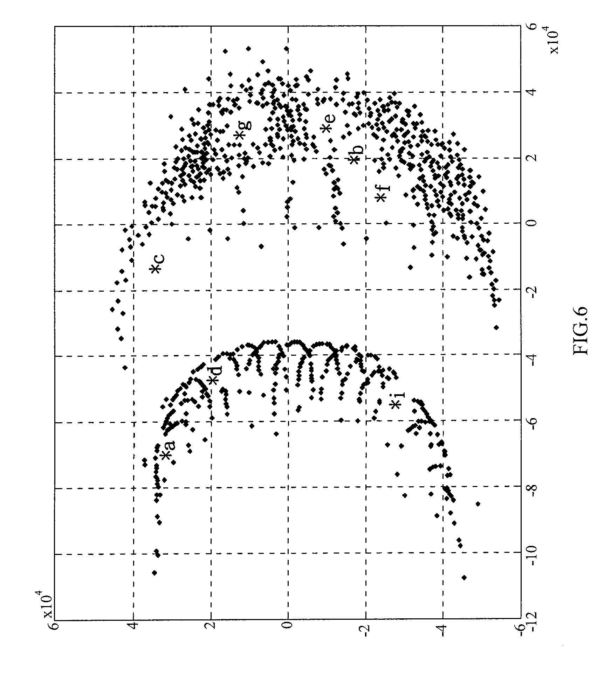

Please refer to Figs. 5 and 6 that are a first and a second spatial positioning relation graph obtained with the working environment positioning system, method, and computer program product thereof according to the present invention. Since persons showing no special liking or disliking attitude toward different people tend to have relatively high tacit agreement with others, points representing such persons usually cluster at a middle portion in the graphs; on the other hand, since persons showing obvious liking or disliking attitude toward different people tend to have relatively low tacit agreement with others, points representing these persons usually disperse near two opposite ends in the graphs. Therefore, the spatial positioning relation graphs have a crescent shape. To ensure correct showing of difference among people in their positioning in an environment, the working environment positioning system, method and computer program product thereof according to the present invention, when conducting background analysis and statistics, set a statistic threshold for individual person positioning analysis. That is why the generated graphs are discontinuous graphs. Persons being positioned at the right side of the graphs are those who have capability of managing and leading a team, compared to other persons in the same organization. For example, in a group of persons, the person "e" at the rightmost position in the graphs may be good at managing and leading a team and is suitable for handling a cooperative work. On the other hand, persons being positioned at the left side of the graphs show relative high independence, compared to other persons in the same organization, and are suitable for handling works independently. For example, the person "a" at the leftmost position in the graphs may be relatively independent and suitable for working independently. Persons being positioned at upper and lower ends of the crescent graphs, such as person "c", are those who have relatively obvious liking and disliking attitude toward other different types of co-workers. Persons being positioned at the right crescent in the graphs have relatively high Stress Resistance Index in terms of pressure or stress from other people and have better ability in communicating with others, and are therefore relatively tactful and smart, such as persons "b", "c", "e", "f", and "g". On the other hand, persons being positioned at the left crescent in the graphs have relatively low Stress Resistance Index in terms of pressure or stress from other people, and are therefore persons preferring to work alone but often having unique viewpoints, such as persons "a", "d" and "i".

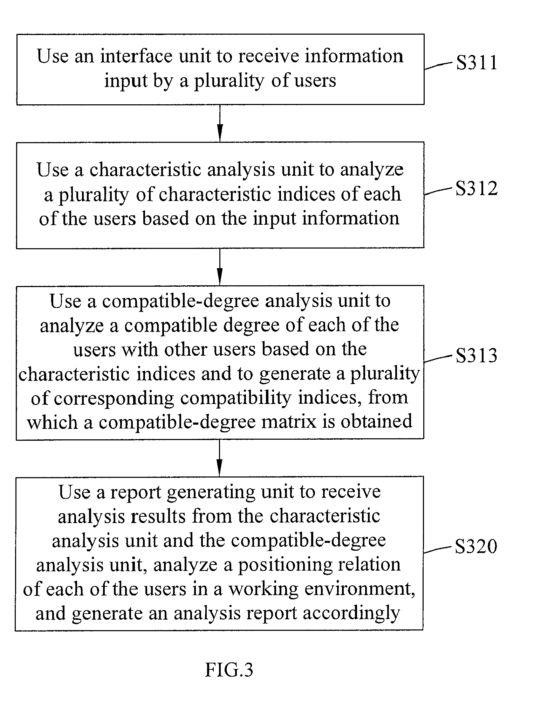

Fig. 3 is a flowchart showing the steps comprised in a working environment positioning method according to a first embodiment of the present invention. As shown, in the first step S311 of the working environment positioning method of the first embodiment, information input by a plurality of users is received using an interface unit. In the second step S312, a characteristic analysis unit analyzes a plurality of characteristic indices of each of the plurality of users based on the input information received by the interface unit. In an operable embodiment, a predetermined classification mechanism is adopted to classify information correspondingly input by the plurality of users when they answer a plurality of predetermined questions at the interface unit, so as to obtain the characteristic indices for each of the users. The predetermined classification mechanism can be implemented through the Classification and Regression Tree (CART) Analysis but without being limited thereto. In the third step 5313, a compatible-degree analysis unit analyzes the compatible degrees among the users based on the users' characteristic indices to thereby generate a plurality of compatibility indices, from which a compatible-degree matrix can be obtained. Finally, in the fourth step S320, a report generating unit receives analysis results from the characteristic analysis unit and the compatible-degree analysis unit, analyzes a positioning relation of each of the users in a working environment, and generates an analysis report accordingly.

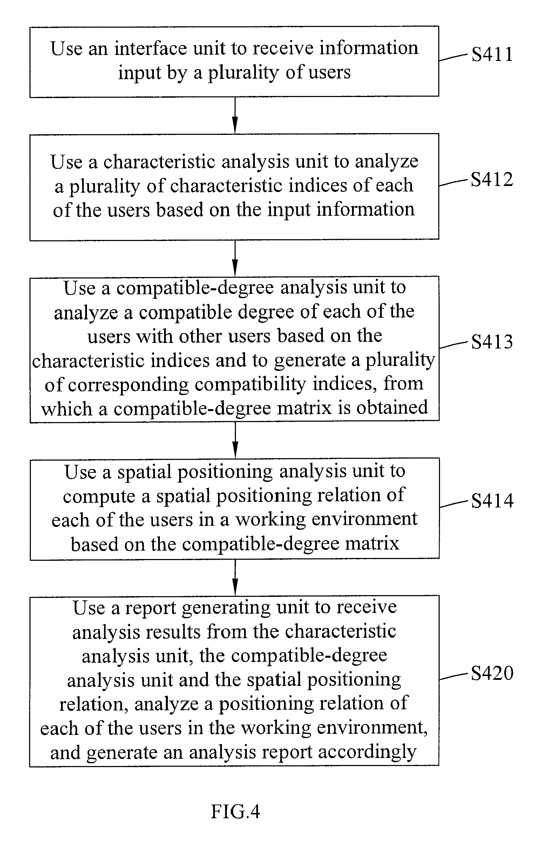

Fig. 4 is a flowchart showing the steps comprised in a working environment positioning method according to a second embodiment of the present invention. As shown, there are five steps comprised in the second embodiment, namely, a first step S411, a second step S412, a third step S413, a fourth step S424, and a fifth step S420. The second embodiment is generally similar to the first embodiment in terms of the first to the third step, but not the fourth and the fifth step. In the fourth step S414, a spatial positioning analysis unit computes a spatial positioning relation for each of the plurality of users based on the compatible-degree matrix. And, in the fifth step S420, a report generating unit receives analysis results from the characteristic analysis unit, the compatible-degree analysis unit and the spatial positioning analysis unit, analyzes a spatial positioning relation of each of the users in the working environment, and generates an analysis report accordingly.

The present invention also provides a working environment positioning computer program product for executing the working environment positioning method. That is, when the computer program product is loaded onto a computer and runs, a user can execute the working environment positioning method provided by the present invention.

With the working environment positioning system, method, and computer program product thereof according to the present invention, it is possible to locate a working manner most suitable for each of the employees in an organization. A manager or an enterprise owner may follow the analysis results from the characteristic analysis, the compatible-degree analysis, and the spatial positioning analysis to respectively assign tasks requiring cooperative work and independent work to suitable employees. For example, employees positioned at the middle portion of the crescent spatial positioning relation graphs presented by the spatial positioning analysis unit may be gathered to form a team for completing a task cooperatively; and employees positioned at two ends of the crescent spatial positioning relation graphs may be assigned with tasks that may be handled independently. With these arrangements, higher operational performance may be obtained for the organization. When organizing a team for a particular task, it is also possible to follow the analysis results to pick up employees having relatively high Consensus Coefficient with one another to form the team. With the team members having close characteristics and high tacit agreement with one another, enhanced coherence and sense of organizational identification may be obtained to avoid unnecessary conflicting viewpoints and upgrade work efficiency and work satisfaction. For a fossilized organization, employees located at a relatively far position in the crescent spatial positioning graphs and having a relatively different attitude toward work handling may be admitted to the organization to increase the chances of friction, coordination, and communication. Employees playing different roles and showing different attitudes may complement one another to create even better organizational performance. When a business organization needs employees showing specific personal characteristics, suitable persons may be recommended through the working environment positioning system and method of the present invention to thereby narrow the range of persons to be recruited or examined. Time and labor needed in arranging position promotion and seeking for new recruits may be decreased to save management cost and resources. An enterprise may also use the working environment positioning system, method, and computer program product thereof according to the present invention to examine whether an applicant has personal characteristics compatible with the existing enterprise culture, so as to accurately choose employees ideal for the enterprise. Two persons having high compatible degree between them usually have high homogeneity in personal characteristics and are easy to communicate with each other. Therefore, it would be beneficial to an organization if an experienced employee having high compatibility with new recruits is recommended to act as a mentor to lead the new recruits in working correctly and assist new recruits in accepting necessary training. In addition, the mentor may also inquire after, offer suggestion to, or give proper instruction to the new recruits as feedback to their performance in work or educational training, so as to help the new recruits in getting familiar with the assigned work and getting along well with the organization. The present invention may also be used in checking and determining whether an employee has the characteristics of a high-rank manager or the potential in management, so that such employee may be recommended to participate in programs and trainings for cultivating managing staffs. Moreover, the present invention may also be used in tracking the employees for their accumulated experiences in work and improvements after accepting related trainings, so as to determine whether there is any employee whose positioning is approaching to the location at where high-rank managers are positioned to thereby show the capability of acting as a high-rank manager or being a successor thereof. Meanwhile, the employees are well assisted in developing their professional career.

The present invention has been described with some preferred embodiments thereof and it is understood that many changes and modifications in the described embodiments can be carried out without departing from the scope and the spirit of the invention that is intended to be limited only by the appended claims.

**Claims**

1. A working environment positioning system, comprising:

an interface unit for receiving information input by a plurality of users;
a characteristic analysis unit being coupled to the interface unit for analyzing a plurality of characteristic indices of each of the users based on the input information;
a compatible-degree analysis unit being coupled to the characteristic analysis unit for analyzing a compatible degree of each of the users with other users based on the plurality of characteristic indices to generate a plurality of corresponding compatibility indices, from which a compatible-degree matrix is obtained; and
a report generating unit for receiving analysis results from the characteristic analysis unit and the compatible-degree analysis unit, and analyzing a positioning relation of each of the users in a working environment based on the analysis results to generate an analysis report accordingly.

2. The working environment positioning system as claimed in claim 1, further comprising a spatial positioning analysis unit coupled to the compatible-degree analysis unit for computing a spatial positioning relation of each of the users in the working environment based on the compatible-degree matrix; and wherein the report generating unit further receives analysis results from the spatial positioning analysis unit to generate the analysis report accordingly.

3. The working environment positioning system as claimed in claim 2, wherein the interface unit comprises a plurality of predetermined questions correlated with the plurality of characteristic indices.

4. The working environment positioning system as claimed in claim 3, wherein the interface unit presents the plurality of predetermined questions to the users in a game mode in which situational scenes respectively correlated with the plurality of predetermined questions are shown.

5. The working environment positioning system as claimed in claim 2, wherein the plurality of characteristic indices comprise a lifestyle index, and the lifestyle index is selected from the group consisting of Lifestyle Index, Tech User Index, and Stress Resistance Index.

6. The working environment positioning system as claimed in claim 3, wherein the characteristic analysis unit uses a predetermined classification mechanism to classify answers to the plurality of predetermined questions input by the users, so as to obtain the characteristic indices of each of the users, and the predetermined classification mechanism is implemented based on Classification and Regression Tree (CART) Analysis.

7. The working environment positioning system as claimed in claim 2, wherein the spatial positioning analysis unit is implemented based on Multidimensional Scaling (MDS).

8. A working environment positioning method, comprising the steps of:

using an interface unit to receive information input by a plurality of users;
using a characteristic analysis unit to analyze a plurality of characteristic indices of each of the plurality of users based on the input information;
using a compatible-degree analysis unit to analyze a compatible degree of each of the users with other users based on the plurality of characteristic indices to thereby generate a plurality of corresponding compatibility indices, from which a compatible-degree matrix is obtained; and
using a report generating unit to receive analysis results from the characteristic analysis unit and the compatible-degree analysis unit, and analyze a positioning relation of each of the users in a working environment based on the analysis results to generate an analysis report accordingly.

9. The working environment positioning method as claimed in claim 8, further comprising the step of using a spatial positioning analysis unit to compute a spatial positioning relation of each of the users in the working environment based on the compatible-degree matrix; and wherein the report generating unit further receives analysis results from the spatial positioning analysis unit to generate the analysis report accordingly.

10. The working environment positioning method as claimed in claim 9, wherein the interface unit comprises a plurality of predetermined questions correlated with the plurality of characteristic indices.

11. The working environment positioning method as claimed in claim 10, wherein the interface unit presents the plurality of predetermined questions to the users in a game mode in which situational scenes respectively correlated with the plurality of predetermined questions are shown.

12. The working environment positioning method as claimed in claim 9, wherein the plurality of characteristic indices comprise a lifestyle index, and the lifestyle index is selected from the group consisting of Lifestyle Index, Tech User Index, and Stress Resistance Index.

13. The working environment positioning method as claimed in claim 10, wherein the characteristic analysis unit uses a predetermined classification mechanism to classify answers to the plurality of predetermined questions input by the users, so as to obtain the characteristic indices of each of the users, and the predetermined classification mechanism is implemented based on Classification and Regression Tree (CART) Analysis..

14. The working environment positioning method as claimed in claim 9, wherein the spatial positioning analysis unit is implemented based on Multidimensional Scaling (MDS).

15. A working environment positioning computer program product, comprising a computer program capable of performing any one of the working environment positioning as claimed in claim 11 to 14 while being executed by a computer.

FIG.1

EP 2 211 297 A1

200

| 211 | 212 | 213 | 214 | 220 |
|---|---|---|---|---|
| Interface Unit | Characteristic Analysis Unit | Compatible -degree Analysis Unit | Spatial Positioning Analysis Unit | Report Generating Unit |

FIG.2

| Use an interface unit to receive information input by a plurality of users | — S311 |

↓

| Use a characteristic analysis unit to analyze a plurality of characteristic indices of each of the users based on the input information | — S312 |

↓

| Use a compatible-degree analysis unit to analyze a compatible degree of each of the users with other users based on the characteristic indices and to generate a plurality of corresponding compatibility indices, from which a compatible-degree matrix is obtained | — S313 |

↓

| Use a report generating unit to receive analysis results from the characteristic analysis unit and the compatible-degree analysis unit, analyze a positioning relation of each of the users in a working environment, and generate an analysis report accordingly | — S320 |

FIG.3

Use an interface unit to receive information input by a plurality of users — S411

Use a characteristic analysis unit to analyze a plurality of characteristic indices of each of the users based on the input information — S412

Use a compatible-degree analysis unit to analyze a compatible degree of each of the users with other users based on the characteristic indices and to generate a plurality of corresponding compatibility indices, from which a compatible-degree matrix is obtained — S413

Use a spatial positioning analysis unit to compute a spatial positioning relation of each of the users in a working environment based on the compatible-degree matrix — S414

Use a report generating unit to receive analysis results from the characteristic analysis unit, the compatible-degree analysis unit and the spatial positioning relation, analyze a positioning relation of each of the users in the working environment, and generate an analysis report accordingly — S420

FIG.4

FIG.5

FIG.6

Europäisches
Patentamt

European
Patent Office

Office européen
des brevets

**EUROPEAN SEARCH REPORT**

Application Number

EP 09 15 5541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below.<br>XP002456252<br>* the whole document * | 1-15 | INV.<br>G06Q10/00 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 19 May 2009 | Anastasov, Yuliyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P04C01)